# EUROPEAN PATENT APPLICATION

(11) **EP 3 813 011 A1**
(43) Date of publication of application: **28.04.2021**
(21) Application number: 20170841.9
(22) Date of filing: 22.04.2020
(51) Int. Cl.: G06T 5/00, G06F 9/54, H04N 1/00

(54) **METHOD AND DEVICE FOR PROCESSING IMAGE**

(30) Priority: 23.10.2019 CN 201911012200
(71) Applicant: Beijing Xiaomi Mobile Software Co., Ltd., Beijing 100085 (CN)
(72) Inventor: YANG, Zongbao, Beijing, Beijing 100085 (CN); ZHENG, Yan, Beijing, Beijing 100085 (CN)
(74) Representative: dompatent von Kreisler Selting Werner - Partnerschaft von Patent- und Rechtsanwälten mbB

(57) **Abstract**

A method of processing an image is applied to the server side and comprises: receiving original image data sent by the mobile terminal; processing the original image data to generate processed image data; and sending the processed image data to the mobile terminal. As such, hardware cost of a mobile terminal can be reduced while maintaining image quality.

## Description

### TECHNICAL FIELD

The present invention relates generally to the field of image processing technologies, more particularly to a method and a device for processing an image.

### BACKGROUND

As consumers' demand on photographing increases, the requirements on the image quality of terminals have become more sophisticated. Under such circumstance, how to balance the hardware cost and the image quality of mobile terminals has become a key issue.

### SUMMARY

The present invention provides a method and a device for processing an image so as to resolve shortage in relevant arts.

The embodiments of the present invention provide a method for processing an image, applied to a server, which includes:
receiving original image data sent by a mobile terminal;
processing the original image data to generate processed image data; and
sending the processed image data to the mobile terminal.

Preferably, the original image data have a first specified format and are generated by an image sensor of the mobile terminal.

Preferably, the receiving the original image data sent by the mobile terminal includes: receiving the original image data via a 5G network.

Preferably, the processing the original image data at least includes any one of the following processing on the original image data: automatic exposure processing, automatic white balance processing, automatic focusing processing, noise reduction processing, and high-dynamic range (HDR) processing on the original image data.

Preferably, the processing the original image data to generate the processed image data further includes: processing the original image data to generate the processed image data with second specified format.

Preferably, the sending the processed image data to the mobile terminal includes: sending the processed image data to the mobile terminal via a 5G network.

The embodiments of the present invention provide a method for processing an image, characterized in that the method is applied to a mobile terminal and includes:
acquiring original image data;
sending the original image data to a server to facilitate the server processing the original image data to generate processed image data; and
receiving the processed image data sent by the server.

Preferably, the mobile terminal includes an image sensor; and the acquiring the original image data includes: acquiring the original image data with a first specified format generated by the image sensor.

Preferably, the sending the original image data to the server includes: sending the original image data to the server via a 5G network.

Preferably, the receiving the processed image data sent by the server includes: receiving the processed image data sent by the server via a 5G network.

Preferably, the processed image data have a second specified format.

The embodiments of the present invention provide a device for processing an image, applied to a server and includes:
a receiving module configured to receive original image data sent by a mobile terminal;
a processing module configured to process the original image data to generate processed image data; and
a sending module configured to send the processed image data to the mobile terminal.

Preferably, the original image data have a first specified format and are generated by an image sensor of the mobile terminal.

Preferably, the receiving module is further configured to receive the original image data via a 5G network.

Preferably, the processing module includes at least one of the following: an automatic exposure processing unit, an automatic white balance processing unit, an automatic focusing processing unit, a noise reduction processing unit, or an HDR processing unit.

Preferably, the processing module further includes: a processing unit configured to process the original image data to generate the processed image data with a second specified format.

Preferably, the sending module is further configured to send the processed image data to the mobile terminal via a 5G network.

The embodiments of the present invention provide a device for processing an image, applied to a mobile terminal and includes:

an acquiring module configured to acquire original image data;
a sending module configured to send the original image data to a server, to facilitate the server processing the original image data to generate processed image data; and
a receiving module configured to receive the processed image data sent by the server.

Preferably, the mobile terminal includes an image sensor; and the acquiring module is configured to acquire the original image data with a first specified format generated by an image sensor.

Preferably, the sending module is further configured to send the original image data to the server via a 5G network.

Preferably, the receiving module is further configured to receive the processed image data sent by the server via a 5G network.

Preferably, the processed image data have a second specified format.

Various embodiments of the method and device for processing an image can have the following advantages:

In the embodiments of the present invention, image processing is performed at the server side, thereby reducing the image processing requirement on the mobile terminal, and reducing the hardware cost and the maintenance cost of the mobile terminal while maintaining image quality.

### BRIEF DESCRIPTION OF THE DRAWINGS

The accompanying drawings, which are incorporated in and constitute a part of this invention, illustrate embodiments consistent with the invention and, together with the invention, serve to explain the principles of the invention.
FIG. 1 is a flowchart illustrating a method for processing an image in accordance with some embodiments.
FIG. 2 is a flowchart illustrating a method for processing an image in accordance with another exemplary embodiment.
FIG. 3 is a structural block diagram illustrating a device for processing an image in accordance with some embodiments.
FIG. 4 is a structural block diagram of a processing module in the device for processing the image in accordance with some embodiments.
FIG. 5 is a structural block diagram of a processing module in the device for processing the image in accordance with another exemplary embodiment.
FIG. 6 is a structural block diagram illustrating a device for processing an image in accordance with another exemplary embodiment.
FIG. 7 is a structural block diagram of a mobile terminal in accordance with some embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

The terms used in the present invention are for the purpose of describing particular embodiments only and are not intended to limit the present invention. Unless otherwise defined, the technical or scientific terms used in the present invention shall have the ordinary meanings understood by those skilled in the art. The words "a" or "an" and the like used in the present invention and the appended claims do not indicate a limitation on quantity, but rather indicate that there is at least one. Unless otherwise specified, "comprise"/"comprising" or "include"/"including" and similar words mean that the element or object appearing before "comprising" or "including" encompasses the elements or objects appearing after "including" or "including" and the equivalent thereof, and does not exclude other elements or objects. Words such as "connect" or "connected" are not limited to physical or mechanical connections, and may include electrical connections, whether direct or indirect.

The singular forms "a /an," "the" and "said" used in this application and the attached claims are intended to include the plural forms, unless the context clearly indicates otherwise. It should be understood that terms "and/or" used herein refers to and comprises any or all possible combinations of one or more of the associated listed items.

In some embodiments, the mobile terminal includes a camera module, a processor and a display. The camera module is configured to acquire original image data of an image. The processor is configured to receive the original image data generated by the camera module and process the original image data. Moreover, the processor further controls the display to display the image according to processed image data.

In this way, the following solutions may be adopted in the process of optimizing the image quality of the mobile terminal:

First solution: adopting a processor with better image processing performance to optimize the image quality of the mobile terminal. However, the processor with better performance has high cost and is difficult to adapt to mobile terminals of various price grades.

Second solution: optimizing lines for connecting the camera module and the processor according to the generative capacity of the camera module, so as to improve the integrity of signals generated by the camera module and improve the image quality. However, this solution increases the difficulty of wiring on a circuit board and increases the installation and maintenance costs of the lines.

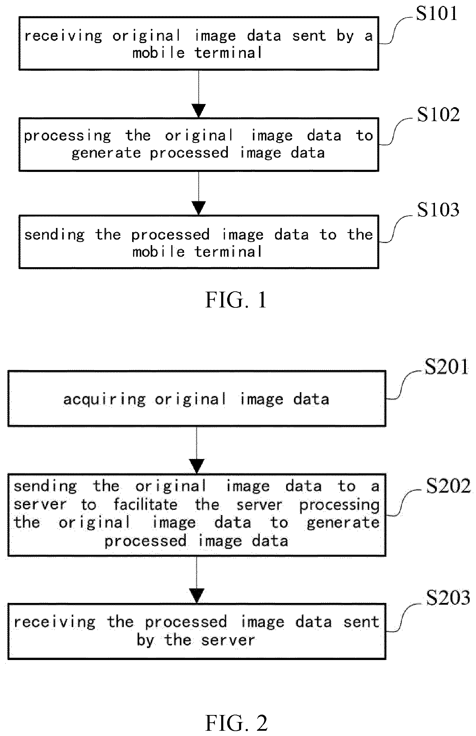

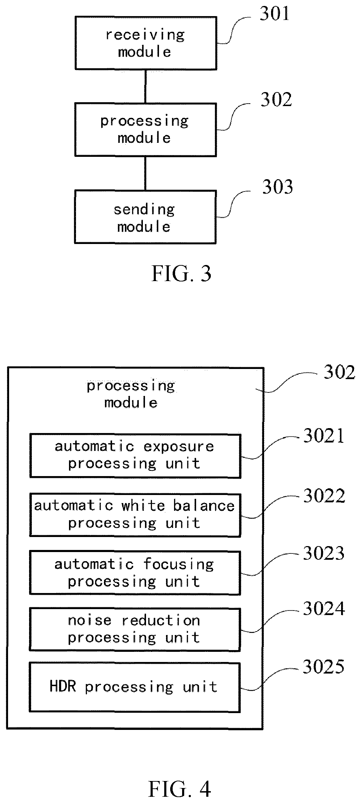

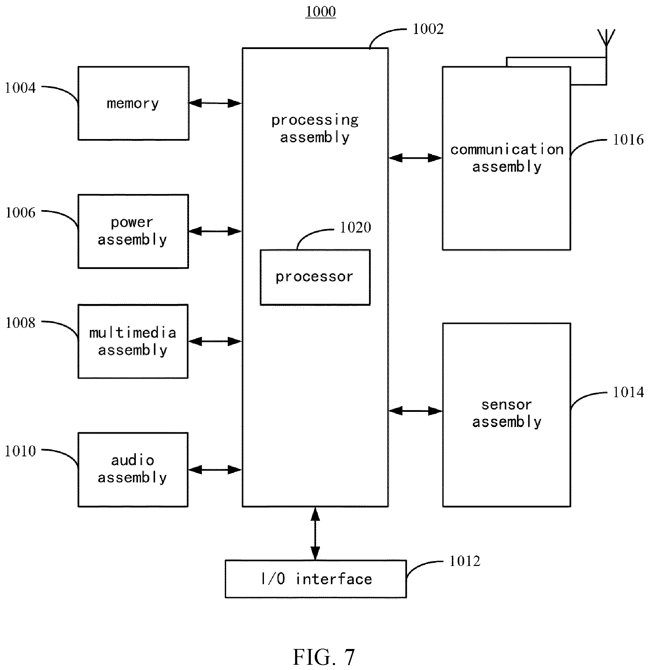

In summary, it is difficult to have both high image quality and low equipment cost for the mobile terminal. In view of this, the present invention provides embodiments of method and device for processing an image. FIGS. 1 and 2 are flowcharts of a method for processing an image in accordance with various exemplary embodiments. FIGS. 3 to 6 are structural block diagrams of a device for processing an image in accordance with various exemplary embodiments. FIG. 7 is a structural block diagram of a mobile terminal in accordance with some embodiments.

In some embodiments, there is provided a method for processing an image which is applied to a server side. Referring to FIG. 1, the method specifically includes:

S101: receiving original image data sent by a mobile terminal.

The original image data are directly generated by an image sensor in the mobile terminal according to optical signals and are not processed. Wherein, the original image data include image data of a one-frame or multi-frame (e.g., 2 frame, 4 frame, 6 frame, 8 frame, or 10 frame) image. Optionally, the image data of the multi-frame image are generated by the image sensor of the mobile terminal in response to one image capturing trigger operation. Accordingly, the server can perform integration of the original image data of the multi-frame image to optimize the processing effect.

Moreover, in the step S101, the original image data have a first specified format such as MIPI10bit RAW. In this way, the original image data received by the server are in unified format to facilitate the subsequent processing of the original image data.

In one example, the step S101 specifically includes: receiving the original image data via a 5G network. Based on the high transmission speed of the 5G network, the original image data transmitted through the 5G network guarantees the timeliness and workflow of the overall processing procedure, and optimizes the user experience. Of course, alternatively, the original image data may be received by other network communication technologies in the step S101.

S102: processing the original image data to generate processed image data.

The server includes a processing assembly for processing the image data, such as a processing chip. In the step S102, the processing the original image data by the server includes at least one of automatic exposure processing, automatic white balance processing, automatic focusing processing, noise reduction processing, and HDR processing. If the processing in the step S202 includes HDR processing, the original image data include original image data of a multi-frame image.

The image quality of the processed image data generated in the step S102 is superior to the image quality of the original image data, so as to satisfy the user demands.

By adoption of this method, the processing procedure of the original image data is performed at the server side. Thus, it is required to optimize the hardware performances of the server for improving the image quality. Then, the mobile terminal adapting to the server can realize the method for processing the image. In this way, the requirement of the mobile terminal on an image processor is reduced and even it can be realized that image processing is be not performed at the mobile terminal side, but completely executed by the server. This method obviously reduces the hardware cost of the mobile terminal. Moreover, the entire image processing procedure is executed by the server, and the improvement of the image quality may not by optimizing the wiring or lines of the camera module and the processor.

In addition, in the step S101, the original image data are all in first specified format. In this case, when adapting to different mobile terminals, the server always receives the original image data in the same format, which improves the compatibility between the server and the mobile terminals with different price grades, different brands, and different models. Moreover, the server can directly process the data after receiving the original image data, thereby improving the processing efficiency and guaranteeing the processing quality.

Moreover, in one example, the step S102 further includes: processing the original image data to generate processed image data with a second specified format. Herein, the second specified format may select any one of digital negative (DNG) format, bitmap (BMP) format, portable network graphics (PNG) format, joint photographic experts group (JPEG) format, and the like.

In this way, the server outputs the processed image data in the same format, thereby facilitating the mobile terminal to receive the processed image data for subsequent operations, and improving the compatibility between the server and various mobile terminals.

S103: sending the processed image data to the mobile terminal.

In one example, the step S103 specifically includes: sending the processed image data to the mobile terminal via a 5G network. In combination with the step S101, the server and the mobile terminal realize information transmission via the 5G network. This means fully utilizes the transmission capability of the 5G network to ensure the smoothness and timeliness of the image processing procedure and optimizes the user experience. Of course, the server may adopt other network communication technologies to send the processed image data.

The method for processing the image according to some embodiments is applied to the mobile terminal side. The mobile terminal includes a camera module, a processor and a display.

The camera module includes a lens and an image sensor. Light is transmitted through the lens and projected onto the image sensor, and the image sensor converts received optical signals into electrical signals so that the original image data is generated. Herein, the specific types of the lens and the image sensor are not limited. For instance, the lens may be selected from a wide-angle lens, a telephoto lens, a fisheye lens, or a macro lens, and the image sensor may be selected from a charge-coupled device (CCD) or a complementary metal oxide semiconductor (CMOS) device. The processor controls a display to display an image according to the processed image data.

Referring to FIG. 2, the method for processing the image provided by the embodiments of the present invention specifically includes:

S201: acquiring original image data.

The original image data are directly generated by an image sensor in a mobile terminal according to optical signals. In one example, the step S201 includes: acquiring the original image data with a first specified format generated by the image sensor. The original image data generated by the image sensor are data not processed.

In one example, the original image data include image data of a one-frame or multi-frame (e.g., 2 frame, 4 frame, 6 frame, 8 frame or 10 frame) image. Optionally, the image data of the multi-frame image are generated by the image sensor of the mobile terminal in response to one image capturing trigger operation. By this means, the server can integrate the original image data of the multi-frame image to optimize the processing effect.

Moreover, the original image data have a first specified format such as MIPIlObit RAW. By this means, the mobile terminal outputs the original image data in unified format, such that various mobile terminals can adapt to the server, thereby improving the compatibility and the consistency of data processing.

S202: sending the original image data to the server to facilitate the server processing the original image data to generate processed image data.

In combination with the workflow of the server side, the server is adopted to perform one or more of automatic exposure processing, automatic white balance processing, automatic focusing processing, noise reduction processing, and HDR processing on the original image data.

In this way, the image processing procedure is performed at the server side, thereby reducing the requirement on the image processing capacity of the processor of the mobile terminal, further reducing the hardware cost of the processor in the mobile terminal and/or the wiring of a circuit board. Moreover, this means is applicable to mobile terminals with various price grades, brands and models, so the mobile device with low cost can also reveal high-quality images to meet user needs.

In one example, the step S202 specifically includes: sending the original image data to the server via a 5G network.

Moreover, after the step S202, the method further includes:

S203: receiving the processed image data sent by the server. In one example, the step S203 specifically includes: receiving the processed image data sent by the server via a 5G network.

In this way, the mobile terminal performs data transmission with the server through the 5G network. Based on the ultra-high-speed data transmission capability of the 5G network, the mobile terminal uploads the original image data and receives the processed image data almost in real time. Moreover, for users of the mobile terminal, the overall image processing procedure shows good timeliness and fluency.

In such a case, the mobile terminal is equipped with a 5G module to send and receive data through the 5G network. Of course, alternatively, the mobile terminal may perform data transmission with the server through other wireless communication technologies, such as higher-level communication technologies such as 6G, which is not specifically limited in this invention.

As for the step S203, it should be also noted that the processed image data are in a second specified format such as DNG format, BMP format, PNG format or JPEG format. In this way, the format of the processed image data received by the mobile terminal is unified, and after the mobile terminal receives the processed image data, the image can be displayed according to the processed image data, thereby optimizing the consistency and compatibility of the mobile terminal and the server during image processing.

Based on the above method for processing the image at the server side and the terminal side, in some embodiments, the overall interactive process of the method for processing the image according to the embodiments in the present invention is as follows:

The mobile terminal acquires the original image data in response to one image capturing trigger operation. After acquiring the original image data, the mobile terminal sends the original image data to the server. The server receives the original image data and performs focusing processing, white balance processing, noise reduction processing and rendering processing and the like to generate the processed image data. Subsequently, the server sends the processed image data to the mobile terminal. The mobile terminal receives the processed image data and performs subsequent operation accordingly, such as displaying an image on a display.

The method for processing the images according to the embodiments in the present invention perform image processing at the server side, thereby reducing the requirement at the mobile terminal side on the image processing capacity of the processor, and further reducing the hardware cost of the mobile terminal and the debugging and maintenance costs of the mobile terminal. In addition, the method according to the embodiments of the present invention has high universality and can be applied to mobile terminals with various models, prices and brands.

Based on the above method, the embodiments of the present invention provides a device for processing an image correspondingly. In some embodiments, referring to FIG. 3, the device for processing the image is applied to a server and includes:
a receiving module 301 configured to receive original image data sent by a mobile terminal;
a processing module 302 configured to process the original image data to generate processed image data; and
a sending module 303 configured to send the processed image data to the mobile terminal.

In one example, the original image data have a first specified format and are generated by an image sensor of the mobile terminal.

In one example, the receiving module 301 is further configured to receive the original image data via a 5G network.

In one example, referring to FIG. 4, the processing module 302 at least includes one of an automatic exposure processing unit 3021, an automatic white balance processing unit 3022, an automatic focusing processing unit 3023, a noise reduction processing unit 3024 and an HDR processing unit 3025.

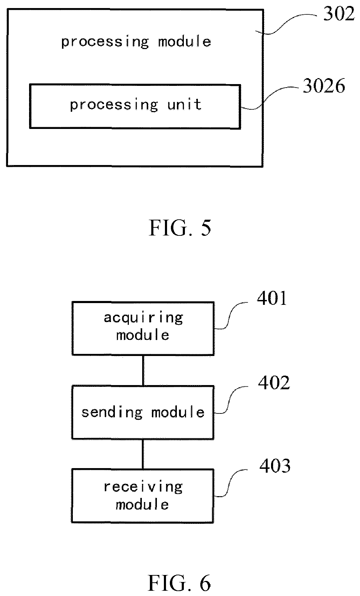

In one example, referring to FIG. 5, the processing module 302 further includes a processing unit 3026 which is configured to process the original image data to generate the processed image data with a second specified format.

In one example, the sending module is further configured to send the processed image data to the mobile terminal via a 5G network.

In one example, referring to FIG. 6, the device for processing the image is applied to the mobile terminal and includes:
an acquiring module 401 configured to acquire original image data;
a sending module 402 configured to send the original image data to a server, to facilitate the server processing the original image data to generate processed image data; and
a receiving module 403 configured to receive the processed image data sent by the server.

In one example, the mobile terminal includes an image sensor, and the acquiring module 401 is configured to acquire the original image data with first specific format generated by the image sensor.

In one example, the sending module 402 is further configured to send the original image data to the server via a 5G network.

In one example, the receiving module 403 is further configured to receive the processed image data sent by the server via a 5G network.

Referring to FIG. 7, the mobile terminal 1000 may comprise one or more of a processing assembly 1002, a memory 1004, a power assembly 1006, a multi-media assembly 1008, an audio assembly 1010, an input/output (I/O) interface 1012, a sensor assembly 1014 and a communication assembly 1016.

The processing assembly 1002 typically controls overall operations of the mobile terminal 1000, such as the operations associated with display, telephone calls, data communications, camera operations, and recording operations. The processing assembly 1002 may include one or more processors 1020 to execute instructions to perform all or part of the steps in the above described methods. Moreover, the processing assembly 1002 may include one or more modules which facilitate the interaction between the processing assembly 1002 and other assemblies. For instance, the processing assembly 1002 may include a multimedia module to facilitate the interaction between the multimedia assembly 1008 and the processing assembly 1002.

The memory 1004 is configured to store various types of data to support the operation of the mobile terminal 1000. Examples of such data include instructions for any applications or methods operated on the mobile terminal 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power assembly 1006 provides power to various assemblies of the mobile terminal 1000. The power assembly 1006 may include a power management system, one or more power sources, and any other assemblies associated with the generation, management, and distribution of power in the mobile terminal 1000.

The multimedia assembly 1008 includes a screen providing an output interface between the mobile terminal 1000 and the user. In some embodiments, the screen may include a liquid crystal display (LCD) and a touch panel (TP). In some embodiments, the screen may include an organic light-emitting diode (OLED) display or other types of displays.

If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and pressure associated with the touch or swipe action. In some embodiments, the multimedia assembly 1008 includes a front camera and/or a rear camera. The front camera and the rear camera may receive external multimedia data while the mobile terminal 1000 is in an operation mode, such as a photographing mode or a video mode. Each of the front camera and the rear camera may be a fixed optical lens system or have focus and optical zoom capability.

The audio assembly 1010 is configured to output and/or input audio signals. For example, the audio assembly 1010 includes a microphone ("MIC") configured to receive an external audio signal when the mobile terminal 1000 is in an operation mode, such as a call mode, a recording mode, and a voice recognition mode. The received audio signal may be further stored in the memory 1004 or transmitted via the communication assembly 1016. In some embodiments, the audio assembly 1010 further includes a speaker to output audio signals.

The I/O interface 1012 provides an interface between the processing assembly 1002 and peripheral interface modules, such as a keyboard, a click wheel, buttons, and the like. The buttons may include, but are not limited to, a home button, a volume button, a starting button, and a locking button.

The sensor assembly 1014 includes one or more sensors to provide status assessments of various aspects of the mobile terminal 1000. For instance, the sensor assembly 1014 may detect an open/closed status of the mobile terminal 1000, relative positioning of assemblies, e.g., the display and the keypad, of the mobile terminal 1000, a change in position of the mobile terminal 1000 or a assembly of the mobile terminal 1000, a presence or absence of user contact with the mobile terminal 1000, an orientation or an acceleration/deceleration of the mobile terminal 1000, and a change in temperature of the mobile terminal 1000. The sensor assembly 1014 may include a proximity sensor configured to detect the presence of nearby objects without any physical contact. The sensor assembly 1014 may also include a light sensor, such as a CMOS or CCD image sensor, for use in imaging applications. In some embodiments, the sensor assembly 1014 may also include an accelerometer sensor, a gyroscope sensor, a magnetic sensor, a pressure sensor, or a temperature sensor.

The communication assembly 1016 is configured to facilitate communication, wired or wirelessly, between the mobile terminal 1000 and other devices. The mobile terminal 1000 can access a wireless network based on a communication standard, such as Wi-Fi, 2G, 3G, 4G, 5G, or a combination thereof. In one exemplary embodiment, the communication assembly 1016 receives a broadcast signal or broadcast associated information from an external broadcast management system via a broadcast channel. In one exemplary embodiment, the communication assembly 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the mobile terminal 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic assemblies, for performing the above described methods.

In exemplary embodiments, there is also provided a non-transitory computer-readable storage medium including instructions, such as included in the memory 1004, executable by the processor 1020 in the mobile terminal 1000, for performing the above methods. For example, the non-transitory computer-readable storage medium may be a ROM, a random-access memory (RAM), a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

## Claims

1. A method for processing an image, **characterized in that** the method is applied to a server and comprises:
(S101) receiving original image data sent by a mobile terminal;
(S102) processing the original image data to generate processed image data; and
(S103) sending the processed image data to the mobile terminal.

2. The method according to claim 1, **characterized in that** the original image data have a first specified format and are generated by an image sensor of the mobile terminal.

3. The method according to any one of claims 1 or 2, **characterized in that** the receiving the original image data sent by the mobile terminal comprises: receiving the original image data via a 5G network.

4. The method according to any one of claims 1 to 3, **characterized in that** the processing the original image data comprises at least one of automatic exposure processing, automatic white balance processing, automatic focusing processing, noise reduction processing, and high-dynamic range (HDR) processing on the original image data.

5. The method according to claim 4, **characterized in that** the processing the original image data to generate the processed image data further comprises:
processing the original image data to generate the processed image data with a second specified format.

6. The method according to any one of claims 1 to 5, **characterized in that** the sending the processed image data to the mobile terminal comprises:
sending the processed image data to the mobile terminal via a 5G network.

7. A method for processing an image, **characterized in that** the method is applied to a mobile terminal and comprises:
(S201) acquiring original image data;
(S202) sending the original image data to a server to facilitate the server processing the original image data to generate processed image data; and
(S203) receiving the processed image data sent by the server.

8. The method according to claim 7, **characterized in that** the mobile terminal comprises an image sensor; and the acquiring the original image data comprises:
acquiring the original image data with a first specified format generated by the image sensor.

9. The method according to any one of claims 7 or 8, **characterized in that** the sending the original image data to the server comprises:
sending the original image data to the server via a 5G network.

10. The method according to any one of claims 7 to 9, **characterized in that** the receiving the processed image data sent by the server comprises:
receiving the processed image data sent by the server via a 5G network.

11. The method according to any one of claims 7 to 10, **characterized in that** the processed image data have a second specified format.

12. A device for processing an image, **characterized in that** the device is applied to a server and comprises:
a receiving module (301) configured to receive original image data sent by a mobile terminal;
a processing module (302) configured to process the original image data to generate processed image data; and
a sending module (303) configured to send the processed image data to the mobile terminal.

13. The device according to claim 12, **characterized in that** the original image data have a first specified format and are generated by an image sensor of the mobile terminal; and the processed image data have a second specified format.

14. A device for processing an image, **characterized in that** the device is applied to a mobile terminal and comprises:
an acquiring module (401) configured to acquire original image data;
a sending module (402) configured to send the original image data to a server, to facilitate the server processing the original image data to generate processed image data; and
a receiving module (403) configured to receive the processed image data sent by the server.

15. The device according to claim 14, **characterized in that** the mobile terminal comprises an image sensor; and the acquiring module (401) is configured to acquire the original image data with a first specified format generated by an image sensor; and the processed image data have a second specified format.
